# EUROPEAN PATENT APPLICATION

(11) **EP 2 793 433 A1**
(43) Date of publication of application: **22.10.2014**
(21) Application number: 13829992.0
(22) Date of filing: 13.08.2013
(51) Int. Cl.: H04L 12/70

(54) **METHOD, DEVICE AND SYSTEM FOR ACQUIRING ENDPOINT MAC ADDRESS OF MAINTENANCE ENTITY GROUP**

(30) Priority: 13.08.2012 CN 201210286719
(71) Applicant: Huawei Technologies Co., Ltd., Shenzhen, Guangdong 518129 (CN)
(72) Inventor: PU, Yun, Shenzhen Guangdong 518129 (CN); LUO, Yong, Shenzhen Guangdong 518129 (CN)
(74) Representative: Maiwald Patentanwalts GmbH
(86) International application number: PCT/CN2013/081406
(87) International publication number: WO 2014/026598

(57) **Abstract**

The present invention provides a method, an apparatus and a system for acquiring a MAC address of an MEP. The present invention is used to acquire a MAC address of a specific MEP in the Ethernet. The method includes: receiving, by a first MEP, a message that is sent by a second MEP to request a MAC address; after receiving the request, if finding that a requested object points to the first MEP, responding, by the first MEP, with its own MAC address, so that the second MEP acquires the MAC address of the first MEP. The request and response messages are implemented in a manner of extended messages. According to the present invention, a MAC address of a specific MEP can be acquired by means of message interaction between MEPs, which is highly flexible and occupies fewer link resources.

## Description

This application claims priority to Chinese Patent Application No. 201210286719.7 filed with the Chinese Patent Office on August 13, 2012 and entitled "METHOD, APPARATUS AND SYSTEM FOR ACQUIRING MAC ADDRESS OF MAINTENANCE ENTITY GROUP END POINT", which is incorporated herein by reference in its entirety.

### TECHNICAL FIELD

The present invention relates to the field of communications technologies, and in particular, to a method, an apparatus and a system for acquiring a Media Access Control (Media Access Control, MAC) address of a maintenance entity group end point (Maintenance Entity Group End Point, MEP).

### BACKGROUND

Ethernet (Ethernet) technology has been widely used and has become one of the most important technologies in an entire communications network. With continuous development of Ethernet networks, operators pay increasing attention to maintainability of devices; the work of managing and maintaining a network also becomes increasingly important. Under such circumstances, operation, administration and maintenance (OAM, Operations, Administration and Maintenance) of Ethernet also receive increasing attention.

Y.1731 and IEEE 802.1ag provide functions to check, locate and isolate connection faults in networks that are operated by a plurality of independent organizations. The two standards both define a maintenance entity group end point MEP, and implementation of the Ethernet OAM function depends on channel connectivity. Checking connectivity of a channel requires that MEPs firstly be set up at two ends of the channel, and connectivity of the MEPs at the two ends is checked to check the connectivity of the channel.

In an existing mechanism of Ethernet OAM, an identity (ID, identity) is defined for each MEP, where the ID is an integer. For all Ethernet OAM functions, MEP configuration must be first performed. For example, functions such as loopback, link trace, latency, and jitter all require assignment of a MAC address of a remote MEP so as to implement such Ethernet OAM functions that require message interaction between a local MEP and a remote MEP. The manner of directly assigning a MAC address of a remote MEP requires firstly a query of the MAC address of the remote MEP, which is inconvenient for use.

In the prior art, a local MEP acquires the MAC address of a remote MEP by using a continuity check message (CCM, Continuity Check Message). All MEPs in a same maintenance association (MA, Maintenance Association) periodically send and receive CCM messages; after receiving a message sent by a remote MEP, a local MEP performs CCM database (DATABASE) learning on an ID of the remote MEP and a MAC address of the remote MEP so as to acquire the MAC address of the remote MEP, which is used to implement various ETHOAM functions. This method relies on enabling of a CCM continuity check function, occupies a large quantity of resources, is incapable of acquiring a MAC address of a specific MEP, and lacks flexibility.

### SUMMARY

In order to solve the problem that a method in the prior art for acquiring a MAC address of an MEP in a system relies on enabling of a CCM continuity check function, occupies a large quantity of resources, is incapable of acquiring a MAC address of a specific MEP, and lacks flexibility, embodiments of the present invention provide a method, an apparatus and a system for acquiring a MAC address of an MEP. Specifically,

According to a first aspect of the embodiments of the present invention, a method for acquiring a MAC address of an MEP in Ethernet is provided, including: receiving, by a first MEP, a first message that carries an MEP identity ID of a target MEP; determining, by the first MEP, whether a maintenance domain MD Level carried in the first message is the same as an MD Level of an MD to which the first MEP belongs, and if the same, further determining, by the first MEP, whether the target MEP ID carried in the first message is the same as an MEP ID of the first MEP itself; and if the same, sending, by the first MEP, a second message by broadcasting or by using a source MAC address in the received first message as a destination MAC address, where the second message carries a MAC address of the first MEP, so that a receiving party of the second message acquires the MAC address of the first MEP.

In a first possible implementation manner of the first aspect, the first message may be a loopback message LBM message; the MEP ID of the target MEP may be carried in an optional type-length-value Optional TLV field of the LBM message; and a destination MAC address of the LBM message may be 01-80-C2-00-00-3x, where x is a level of a maintenance domain MD to which the target MEP belongs. Further, the second message may be a loopback response LBR message; and the MAC address of the first MEP may be carried in a source MAC address field of the LBR message; or the MAC address of the first MEP may be carried in both a source MAC address field of the LBR message and an optional type-length-value Optional TLV field of the LBR message. Furthermore, the optional type-length-value Optional TLV field of the LBR message may further carry the MEP ID of the first MEP.

In a second possible implementation manner of the first aspect, the first message may be a link trace message LTM message; the MEP ID of the target MEP may be carried in an additional type-length-value Additional TLV field of the LTM message; and a destination MAC address of the LTM message may be 01-80-C2-00-00-3x, where x is the level of the maintenance domain MD to which the first MEP belongs. Further, the second message may be a link trace response LTR message; and the MAC address of the first MEP may be carried in a source MAC address field of the LTR message; or the MAC address of the first MEP may be carried in both a source MAC address field of the LTR message and an additional type-length-value Additional TLV field of the LTR message. Furthermore, the Additional TLV field of the LTR message may further carry the MEP ID of the first MEP.

According to a second aspect of the embodiments of the present invention, another method for acquiring a MAC address of an MEP is provided, including: sending, by broadcasting, a first message that carries an MEP identity ID of a target MEP so that the target MEP responds with a MAC address corresponding to the MEP ID, where the MEP ID is carried in a type-length-value TLV field of the first message; and receiving a second message and acquiring the MAC address from a TLV field of the second message.

According to the technical solution of the methods disclosed in the embodiments of the present invention, a MAC address of a required MEP can be acquired according to a known MEP ID by means of interaction based on two messages, which overcomes the defect of relying on enabling of a CCM continuity check function in the prior art, and is capable of acquiring a MAC address of a specific MEP, thereby providing high flexibility of application and occupying fewer link resources.

According to a third aspect of the embodiments of the present invention, a network apparatus is provided, where specifically:
the network apparatus may be used to acquire a MAC address of an MEP and the apparatus includes: a first receiving module, configured to receive a message;
a first parsing module, configured to parse a first message received by the first receiving module and acquire an MD level of the first message and an MEP ID of a target MEP from the first message; a determining module, configured to determine whether the MD level of the first message acquired by the first parsing module is the same as an MD level of an MEP established on the apparatus, if the same, further determine whether the MEP ID of the target MEP acquired by the first parsing module is the same as an MEP ID of the MEP established on the apparatus, and if the same, instruct a first generating module to generate a message; the first generating module, configured to generate the second message, where the second message carries a Media Access Control MAC address of the apparatus; and a first sending module, configured to send the message generated by the first generating module.

In a first possible implementation manner of the third aspect, the apparatus may receive and parse the first message, where the first message is a loopback message LBM message; the MEP ID of the target MEP is carried in an optional type-length-value Optional TLV field of the LBM message; and a destination MAC address of the LBM message is 01-80-C2-00-00-3x, where x is a level of a maintenance domain MD to which the target MEP belongs. Further, the network apparatus may be configured to generate the second message, where the second message is a loopback response LBR message; and the first generating module of the network apparatus may add the MAC address of the apparatus to a source MAC address field of the LBR message; or the first generating module of the network apparatus may add the MAC address of the apparatus to both a source MAC address field of the LBR message and an optional type-length-value Optional TLV field of the LBR message. Furthermore, the optional type-length-value Optional TLV field of the LBR message further carries the MEP ID of the MEP established on the apparatus.

In a second possible implementation manner of the third aspect, the apparatus may receive and parse the first message, where the first message is a loopback message LTM message; the MEP ID of the target MEP may be carried in an additional type-length-value Additional TLV field of the LTM message; and a destination MAC address of the LTM message may be 01-80-C2-00-00-3x, where x is a level of a maintenance domain MD to which the target MEP belongs. Further, the first generating module of the network apparatus may add the MAC address of the apparatus to a source MAC address field of the LTR message; or the first generating module of the network apparatus may add the MAC address of the apparatus to both a source MAC address field of the LBR message and an additional type-length-value Additional TLV field of the LTR message. Furthermore, the network apparatus may be configured to generate the second message, where the second message is a loopback response LTR message; and the additional type-length-value Additional TLV field of the LTR message may further carry the MEP ID of the MEP established on the apparatus.

According to a fourth aspect of the embodiments of the present invention, another network apparatus is provided, specifically including: a second generating module, configured to generate a message, where a type-length-value TLV field of the generated message carries an MEP identity ID of a target maintenance entity group end point MEP, and a destination MAC address of the message is 01-80-C2-00-00-3x, where x is a level of a maintenance domain MD to which the target MEP belongs; a second sending module, configured to send the message generated by the second generating module; a second receiving module, configured to receive a message; and a second parsing module, configured to parse the message received by the second receiving module and acquire a MAC address corresponding to the MEP ID from a TLV field of the received message.

The apparatuses for acquiring a MAC address of an MEP, which are disclosed in the embodiments of the present invention, can implement acquiring of a MAC address of a specific MEP, which can overcome the defect of relying on enabling of a CCM continuity check function in the prior art and occupy fewer link resources.

According to a fifth aspect of the embodiments of the present invention, a system for acquiring a MAC address of an MEP is further provided, where the system includes at least one first network apparatus and at least one second network apparatus that are connected to each other; the first network apparatus is an apparatus that may be configured to generate and send an extended message; the second network apparatus is an apparatus that may be configured to receive and parse an extended message, and generate and send an extended message; the first network apparatus and the second network apparatus are located in a same maintenance association MA; and the first network apparatus and the second network apparatus implement a function of acquiring a MAC address of an MEP by means of message interaction.

By using the system for acquiring a MAC address of an MEP, which is disclosed in the embodiments of the present invention, a MAC address of a specific MEP can be acquired in the system, which overcomes the defect of relying on enabling of a CCM continuity check function in the prior art and occupies fewer link resources.

### BRIEF DESCRIPTION OF DRAWINGS

In order to illustrate the present invention and relevant embodiments more clearly, the following accompanying drawings are provided.
FIG. 1 is a flowchart for acquiring a MAC address of an MEP according to Embodiment 1 of the present invention;
FIG. 2 is a flowchart for acquiring a MAC address of an MEP according to Embodiment 2 of the present invention;
FIG. 3 is a flowchart for acquiring a MAC address of an MEP according to Embodiment 3 of the present invention;
FIG. 4 is a schematic diagram of an apparatus embodiment according to Embodiment 4 of the present invention;
FIG. 5 is a schematic diagram of an apparatus embodiment according to Embodiment 5 of the present invention; and
FIG. 6 is a schematic diagram of an apparatus embodiment according to Embodiment 7 of the present invention.

### DESCRIPTION OF EMBODIMENTS

To make the objectives, technical solutions, and advantages of the present invention clearer, the following further describes the present invention in detail with reference to embodiments and accompanying drawings. Herein, the exemplary embodiments of the present invention and the descriptions thereof are used to explain the present invention, but are not intended to limit the present invention.

### Embodiment 1

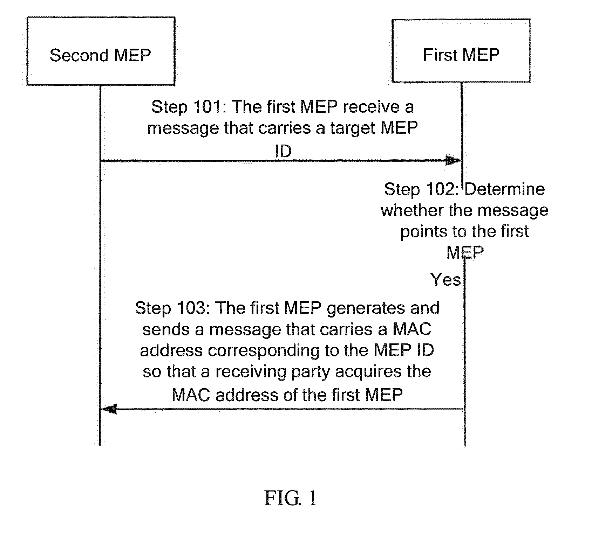

This embodiment of the present invention provides a method for acquiring a MAC address of an MEP. As shown in FIG. 1, the method may be applied to the Ethernet. The method includes:

In the embodiment, a first MEP can, by performing the following steps, enable a second MEP, which is in a same maintenance association MA as the first MEP and knows an MEP ID of the first MEP, to obtain a MAC address of the first MEP:

Step 101: The first MEP receives a message that requests the MAC address of the first MEP and is sent by the second MEP, where the message carries the MEP ID of the first MEP. A sending manner of the second MEP may be broadcast, with a destination MAC address of 01-80-C2-00-00-3x, where x is a level (level) of a maintenance domain (MD, Maintenance Domain) to which the first MEP and the second MEP belong. Optionally, the message received by the first MEP may be an LBM message. Optionally, a manner in which the LBM message carries the MEP ID of the first MEP may be carrying the MEP ID in an optional type-length-value Optional TLV field of the LBM message, such as an Optional LBM TLV (MEP TLV) field shown in Table 1. Certainly, the MEP ID of the first MEP may be placed in another field of the LBM message according to a specific proprietary protocol. An Ethernet message carries sequentially a preamble, a destination address, a source MAC address, a type and data, and a frame check sequence. Table 1 is a data part for an Ethernet message type of 0x8902, where a type option in the Optional LBM TLV (MEP TLV) field may be selected as organization-specific organization-specific TLV, where the organization-specific TLV type correspondingly requires sequential filling in of items Type, Length, OUI, Sub-Type and Value, For example, their specific content may be: Type = 31, which identifies organization-specific TLV and occupies one byte; Length = 6, which occupies two bytes and identifies a length; optionally, OUI may be OXFFFF01, which occupies 3 bytes and may be used to identify a manufacturing organization; Sub-type: 1, which occupies one byte and identifies MEP TLV; and Value occupies two bytes and equals the MEP ID. In addition, the message received by the first MEP may be an LTM message. Optionally, a manner in which the LTM message carries the MEP ID of the first MEP may be carrying the MEP ID in an additional type-length-value Additional TLV field of the LTM message, such as an Additional LTM TLV (MEP TLV) field shown in Table 2. Certainly, the MEP ID of the first MEP may be placed in another field of the LTM message according to a specific proprietary protocol. Table 2 is a data part for an Ethernet message type of 0x8902, where a type option in the Additional LTM TLV (MEP TLV) field may be selected as organization-specific organization-specific TLV, where the organization-specific TLV type correspondingly requires sequential filling in of items Type, Length, OUI, Sub-Type, and Value. For example, their specific content may be: TYPE = 31, which identifies organization-specific TLV; Length = 6, which occupies two bytes and identifies a length; optionally, OUI may be OXFFFF01, which occupies 3 bytes and may be used to identify a manufacturing organization; Sub-Type = 1, which occupies one byte and identifies MEP TLV; Value occupies two bytes and equals the MEP ID of the first MEP; and a Target MAC address field may be filled in with all 0s. An Ethernet message such as a continuity check message and a delay measurement message, after appropriate extension or adjustment, may also be used to carry the MEP ID of the first MEP.

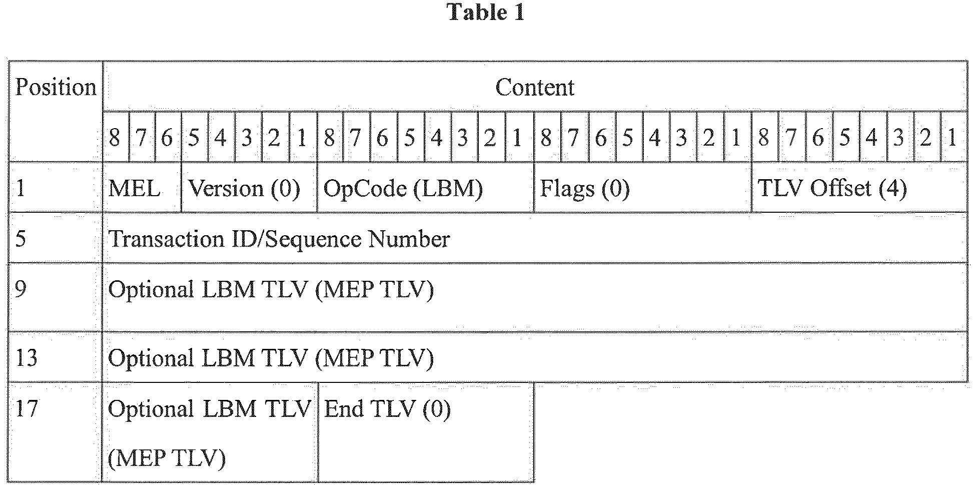

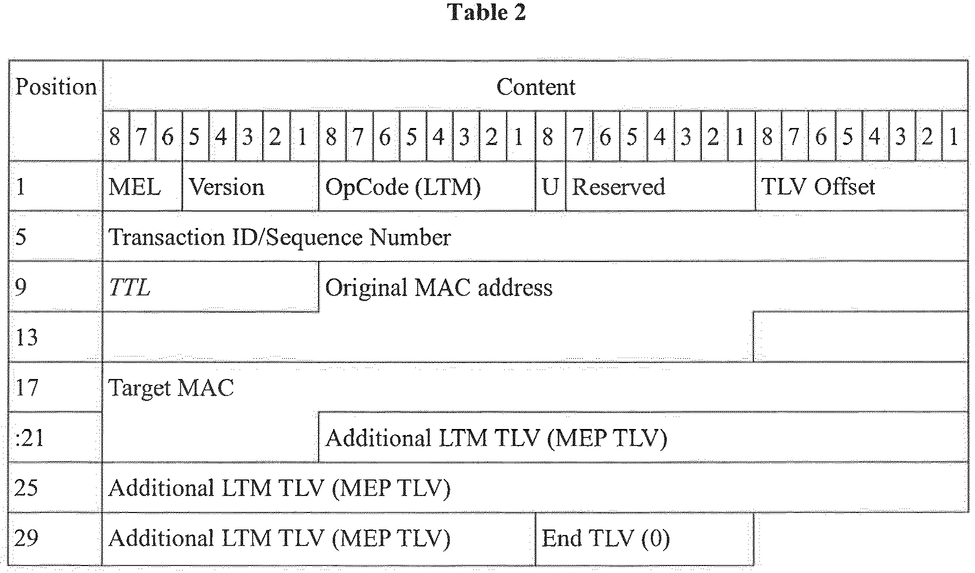

Step 102: After receiving the message, the first MEP determines whether the message points to the first MEP.

A determining method is: comparing an MD level carried in the message with an MD level of the first MEP, if the two are the same, further comparing the MEP ID carried in the message with the first MEP ID, and if the two are the same, determining that the message points to the first MEP.

Step 103: If determining that the received message points to the first MEP, the first MEP generates and sends a message carrying the MAC address of the first MEP, so that a receiving party, the second MEP, that receives the message can parse the message and acquire the MAC address of the first MEP from the message. Optionally, the message may also carry the MEP ID of the first MEP.

After determining that the message points to the first MEP, the first MEP uses a MAC address of the second MEP that sends the message as a destination MAC address, that is, uses a source MAC address (SA, Source Address) carried in a message header of the received message as the destination MAC address, and responds with a message carrying the MAC address of the first MEP. Optionally, the response message may also carry the MEP ID of the first MEP. Optionally, a manner in which the first MEP sends the generated message may be unicast, with the source MAC address of the received message as the destination MAC address. Optionally, the manner in which the first MEP sends the response message may be broadcast, for example, a broadcast sending manner with the destination MAC of 01-80-C2-00-00-3x (x is the MD level of the second MEP, which is the same as the MD level of the first MEP). If the response message of the first MEP does not carry the MEP ID of the first MEP, a specific identifier may be carried in the response message, so that the second MEP can identify the response message of the first MEP; or, a timer may be started after the second MEP sends the message carrying the target MEP ID, and if the second MEP receives a specific message such as an LBR or LTR message within a specific time such as 5 seconds, the message is regarded as a response message of the first MEP. If a TLV field in the response message of the first MEP carries the MAC, the second MEP may determine, based on that the TLV field carries MAC information, that the message is a response message of the first MEP.

If the message received by the first MEP is an LBM message, the response message of the first MEP may be an LBR message. Optionally, a manner in which the LBR message carries the MEP ID and the MAC address of the first MEP may be carrying the MEP ID and the MAC address in an Optional TLV field of the LBR message, as shown by an Optional LBR TLV (MEP TLV) field and an Optional LBR TLV (MAC TLV) field in Table 3. Optionally, the MEP ID of the first MEP may not be carried. Certainly, a source MAC address (SA, Source Address) field of a header of the LBR message also carries a source MAC address, and the second MEP may also acquire the MAC address of the first MEP by directly reading the SA part of the message header. In addition, in a proprietary protocol, the MEP ID and the MAC address of the first MEP may also be carried in another field of the message. A type option in the Optional LBR TLV (MEP TLV) field in Table 3 may be selected as organization-specific organization-specific TLV, where the organization-specific TLV type correspondingly requires sequential filling in of items Type, Length, OUI, Sub-Type, and Value. For example, their specific content may be: TYPE = 31, which occupies one byte and identifies organization-specific TLV; Length = 6, which occupies two bytes and identifies a length; optionally, OUI may be OXFFFF01, which occupies three bytes and may be used to identify a manufacturing organization; Sub-Type: 1, which occupies one byte and identifies MEP TLV; and Value occupies two bytes and equals the MEP ID of the first MEP. In the Optional LBR TLV (MAC TLV) field in Table 3: TYPE = 31, which occupies one byte and identifies organization-specific TLV; Length = 10, which occupies two bytes and identifies a length; optionally, OUI may be OXFFFF01, which occupies three bytes and may be used to identify a manufacturing organization; Sub-Type: 2, which occupies one byte and identifies MAC TLV; and Value occupies 6 bytes and equals the MAC address of the first MEP. If the first MEP receives an LTM message, the response message of the first MEP may be an LTR message. Optionally, a manner in which the LTR message carries the MEP ID and the MAC address of the first MEP may be carrying the MEP ID and the MAC address in an Additional TLV field of the LTR message, as shown by an Additional LTR TLV (MEP TLV) field and an Additional LTR TLV (MAC TLV) field in Table 4. Optionally, the MEP ID of the first MEP may not be carried. Certainly, in a proprietary protocol, the MEP ID and the MAC address of the first MEP may be carried in another field of the message. A type option in the Additional LBR TLV (MEP TLV) field in Table 4 may be selected as organization-specific organization-specific TLV, where the organization-specific TLV type correspondingly requires sequential filling in of items Type, Length, OUI, Sub-Type, and Value. For example, their specific content may be: Type = 31, which occupies one byte and identifies organization-specific TLV; Length = 6, which occupies two bytes and identifies a length; optionally, OUI may be OXFFFF01, which occupies three bytes and may be used to identify a manufacturing organization; Sub-Type: 1, which occupies one byte and identifies MEP, TLV; and Value occupies two bytes and equals the MEP ID of the first MEP. A type option in the Additional LTR TLV (MAC TLV) field in Table 4 may be selected as organization-specific organization-specific TLV, where the organization-specific TLV type correspondingly requires sequential filling in of items Type, Length, OUI, Sub-Type, and Value. For example, their specific content may be: TYPE = 31, which occupies one byte and identifies organization-specific TLV; Length = 10, which occupies two bytes and identifies a length; optionally, OUI may be OXFFFF01, which occupies three bytes and may be used to identify a manufacturing organization; Sub-Type: 2, which occupies one byte and identifies MAC TLV; and Value occupies 6 bytes and equals the MAC address of the first MEP. Optionally, an Ethernet message such as a continuity check message and a delay measurement message, after appropriate extension or adjustment, may also be used as the response message and carry the MEP ID and the MAC address of the first MEP.

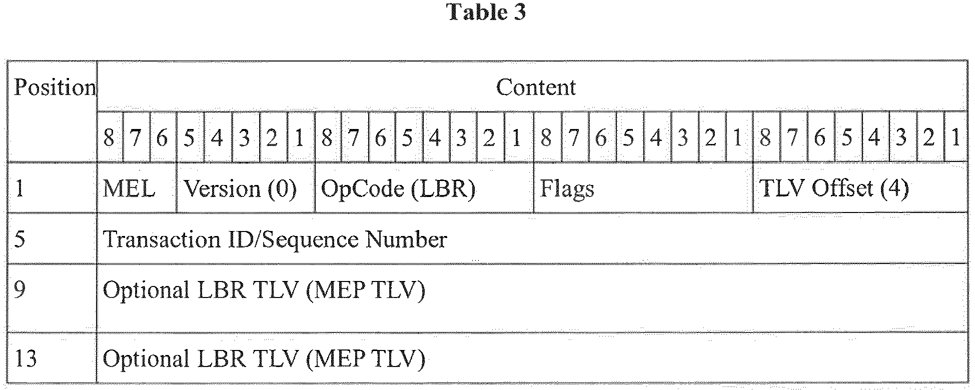

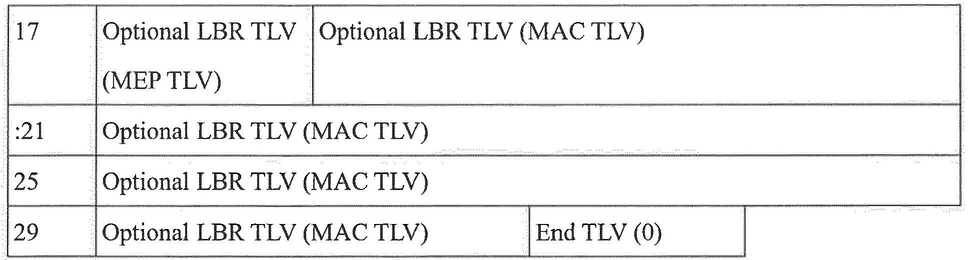

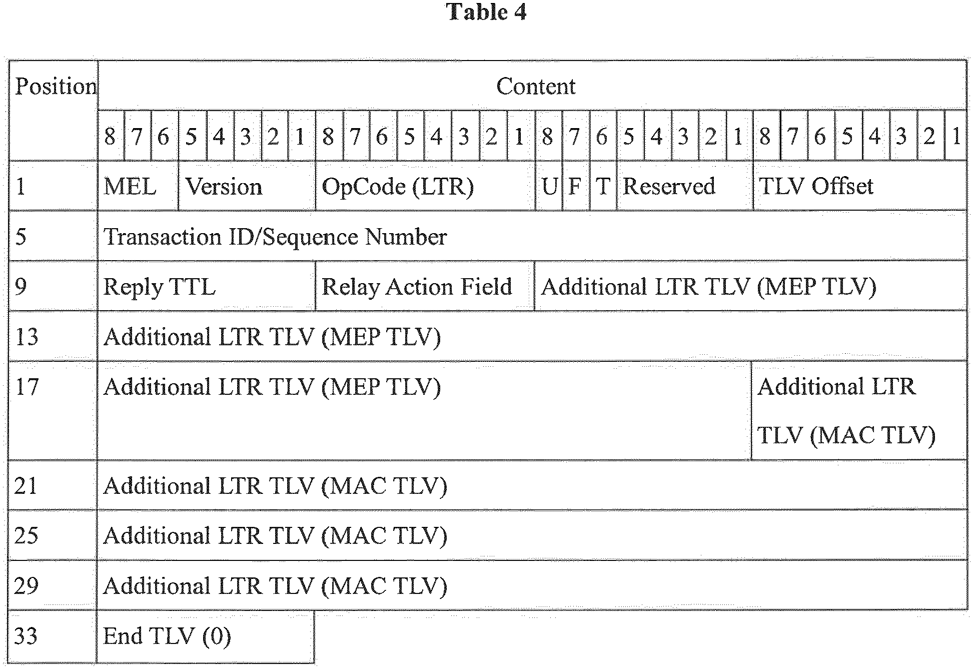

In the embodiment of the present invention, a MAC address of a required MEP can be acquired according to a known MEP ID by means of interaction based on only two messages, which overcomes a defect of relying on enabling of a CCM continuity check function in the prior art, improves efficiency in acquiring a MAC address and occupies fewer link resources. In addition, a MAC address can be acquired and used as required, which is highly flexible and solves a problem of unusable CCM DATABASE learning after aging.

### Embodiment 2

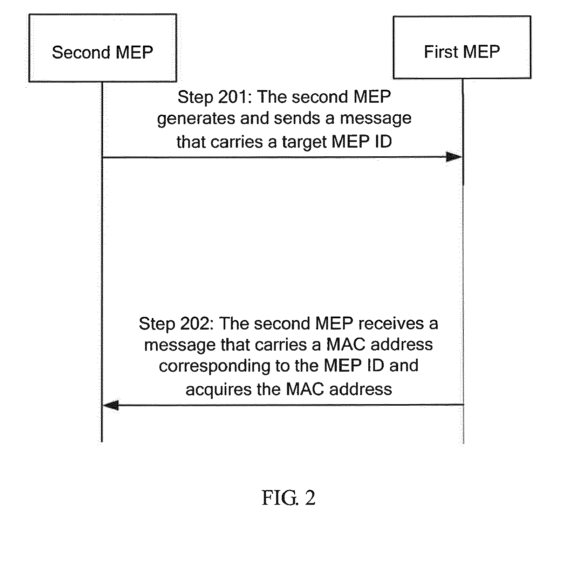

This embodiment of the present invention provides another method for acquiring a MAC address of an MEP. As shown in FIG. 2, the method may be applied to the Ethernet. The method includes:

In the embodiment, a second MEP which knows an MEP ID of a first MEP can, by performing the following steps, acquire a MAC address of the first MEP that is in the same maintenance association MA as the second MEP:

Step 201: The second MEP generates and sends a message requesting the MAC address of the first MEP, where the message carries the MEP ID of the first MEP. A sending manner may be broadcast, with a destination MAC of 01-80-C2-00-00-3x, where x is a level of a maintenance domain (MD, Maintenance Domain) to which the first MEP and the second MEP belong. Optionally, the message received by the first MEP may be an LBM message. Optionally, a manner in which the LBM message carries the MEP ID of the first MEP may be carrying the MEP ID of the first MEP in an optional type-length-value Optional TLV field of the LBM message, such as an Optional LBM TLV (MEP TLV) field shown in Table 1. Certainly, the MEP ID of the first MEP may be placed in another field of the LBM message according to a specific proprietary protocol. A type option in the Optional LBM TLV (MEP TLV) field in Table 1 may be selected as organization-specific organization-specific TLV, where the organization-specific TLV type correspondingly requires sequential filling in of items Type, Length, OUI, Sub-Type, and Value. For example, their specific content may be: Type = 31, which occupies one byte and identifies organization-specific TLV; Length = 6, which occupies two bytes and identifies a length; optionally, OUI may be OXFFFF01, which occupies three bytes and may be used to identify a manufacturing organization; Sub-Type: 1, which occupies one byte and identifies MEP TLV; and Value occupies two bytes and equals the MEP ID. In addition, the message received by the first MEP may be an LTM message.

Optionally, a manner in which the LTM message carries the MEP ID of the first MEP may be carrying the MEP ID in an additional type-length-value Additional LTV field of the LTM message. Certainly, the MEP ID of the first MEP may be placed in another field of the LTM message according to a specific proprietary protocol. A type option in the Additional LTM TLV (MEP TLV) field in Table 2 may be selected as organization-specific organization-specific TLV, where the organization-specific TLV type correspondingly requires sequential filling in of items including Type, Length, OUI, Sub-Type, and Value. For example, their specific content may be: TYPE = 31, which identifies organization-specific TLV; Length = 6, which occupies two bytes and identifies a length; optionally, OUI may be OXFFFF01, which occupies three bytes and may be used to identify a manufacturing organization; Sub-Type = 1, which occupies one byte and identifies MEP TLV; Value occupies two bytes and equals MEP ID of the first MEP; and a Target MAC address field may be filled in with all 0s. An Ethernet message such as a continuity check message and a delay measurement message, after appropriate extension or adjustment, may also be used to carry the MEP ID of the first MEP.

Step 202: The second MEP receives a response message of the first MEP which carries the MAC address of the first MEP, and acquires the MAC address of the first MEP from the message. Optionally, the response message received by the second MEP may be the message disclosed in Table 3 and Table 4 of Embodiment 1 and may also be another extended Ethernet message such as a continuity check message and delay measurement message. Optionally, if the response message of the first MEP carries the MEP ID of the first MEP, the second MEP may also acquire the MEP ID of the first MEP accordingly. A related table entry may further be created as required so as to create a correspondence table entry for the received MAC address and the corresponding MEP ID. A method for acquiring the MAC address of the first MEP may be directly reading a source MAC address carried in an LBR message or LTR message; if the MAC address of the first MEP is carried in an optional field of the LBR message such as an Optional TLV field or an Additional TLV field of the LTR message, the MAC address may be parsed and read from the TLV field; and, if in a proprietary protocol, the MAC address is placed in another field of the message, the MAC address of the first MEP may also be acquired from this another field. If the MEP ID of the first MEP is carried in an optional field of the LBR message such as an Optional TLV field or an Additional TLV field of the LTR message, a method for acquiring the MEP ID of the first MEP may be parsing and acquiring the MEP ID from the TLV field; and, if in a proprietary protocol, the MEP ID is placed in another field of the message, the MEP ID of the first MEP may be acquired from this another field. Optionally, an Ethernet message such as a continuity check message and a delay measurement message, after appropriate extension or adjustment, may also be used as the response message and carry the MEP ID and the MAC address of the first MEP; and a similar method may be used to parse and acquire the MAC address and the MEP ID of the first MEP.

In the embodiment of the present invention, a MAC address of a required MEP can be acquired according to a known MEP ID by means of interaction based on only two messages, which overcomes a defect of relying on enabling of a CCM continuity check function in the prior art, improves efficiency in acquiring a MAC address and occupies fewer link resources. In addition, a MAC address can be acquired and used as required, which is highly flexible and solves a problem of unusable CCM DATABASE learning after aging.

### Embodiment 3

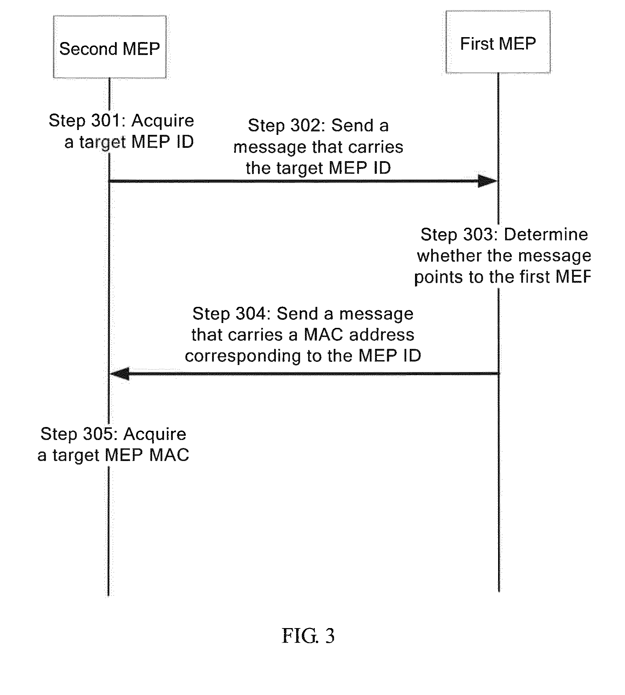

This embodiment of the present invention discloses yet another method for acquiring a MAC address of an MEP, as shown in FIG. 3. The method includes:

In the embodiment, a second MEP that knows an MEP ID of a first MEP can, by performing the following steps, acquire a MAC address of the first MEP that is in a same maintenance association MA as the second MEP:

Step 301: The second MEP acquires the MEP ID of the first MEP. Optionally, an acquiring manner may be acquiring by manual input, acquiring by reading from a storage space according to an instruction, acquiring according to a system instruction, and the like.

Step 302: The second MEP generates and sends a message requesting the MAC address of the first MEP, where the message carries the MEP ID of the first MEP. A sending manner of the second MEP may be broadcast, with a destination MAC of 01-80-C2-00-00-3x, where x is a level of a maintenance domain (MD, Maintenance Domain) to which the first MEP and the second MEP belong. Optionally, the message received by the first MEP may be an LBM message. Optionally, a manner in which the LBM message carries the MEP ID of the first MEP may be carrying the MEP ID in an optional type-length-value Optional TLV field of the LBM message, such as an Optional LBM TLV (MEP TLV) field shown in Table 1. Certainly, the MEP ID of the first MEP may be placed in another field of the LBM message according to a specific proprietary protocol. A type option in the Optional LBM TLV (MEP TLV) field in Table 1 may be selected as organization-specific organization-specific TLV, where the organization-specific TLV type correspondingly requires sequential filling in of items Type, Length, OUI, Sub-Type, and Value. For example, their specific content may be: Type = 31, which occupies one byte and identifies organization-specific TLV; Length = 6, which occupies two bytes and identifies a length; optionally, OUI may be OXFFFF01, which occupies three bytes and may be used to identify a manufacturing organization; Sub-Type: 1, which occupies one byte and identifies MEP TLV; and Value occupies two bytes and equals the MEP ID. In addition, the message received by the first MEP may be an LTM message. Optionally, a manner in which the LTM message carries the MEP ID of the first MEP may be carrying the MEP ID in an additional type-length-value Additional TLV field of the LTM message, such as an Additional LTM TLV (MEP TLV) field shown in Table 2. Certainly, the MEP ID of the first MEP may also be placed in another field of the LTM message according to a specific proprietary protocol. A type option in the Additional LTM TLV (MEP TLV) field in Table 2 may be selected as organization-specific organization-specific TLV, where the organization-specific TLV type correspondingly requires sequential filling in of items Type, Length, OUI, Sub-Type, and Value. For example, their specific content may be: TYPE = 31, which organization-specific TLV; Length = 6, which occupies two bytes and identifies a length; optionally, OUI may be OXFFFF01, which occupies three bytes and may be used to identify a manufacturing organization; Sub-Type = 1, which occupies one byte and identifies MEP TLV; Value occupies two bytes and equals MEP ID of the first MEP; and a Target MAC address field may be filled in with all 0s. An Ethernet message such as a continuity check message and a delay measurement message, after appropriate extension or adjustment, may also be used to carry the MEP ID of the first MEP.

Step 303: After receiving the message, the first MEP determines whether the message points to the first MEP.

A method for the determining is: comparing an MD level carried in the message with an MD level of the first MEP, if the two are the same, further comparing the MEP ID carried in the message with the first MEP ID, and if the two are the same, determining that the message points to the first MEP.

Step 304: If it is determined that the received message points to the first MEP, the first MEP generates and sends a message carrying the MAC address of the first MEP, so that a receiving party of the message, the second MEP, can parse the message and acquire the MAC address of the first MEP from the message. Optionally, the message may also carry the MEP ID of the first MEP.

After determining that the message points to the first MEP, the first MEP uses a MAC address of the second MEP that sends the message as a destination MAC address, that is, uses a source MAC address (SA, Source Address) carried in a message header of the received message as the destination MAC address, and responds with a message carrying the MAC address of the first MEP. Optionally, the response message may also carry the MEP ID of the first MEP. Optionally, a manner in which the first MEP sends the generated message may be unicast, with the source MAC source of the received message as the destination MAC address. Optionally, the manner in which the first MEP sends the generated message may also be broadcast, for example, a broadcast sending manner with a destination MAC of 01-80-C2-00-00-3x (x is the MD level of the second MEP, which is the same as the MD level of the first MEP). If the response message of the first MEP does not carry the MEP ID of the first MEP, a specific identifier may be carried in the response message, so that the second MEP can identify the response message of the first MEP; or, a timer may be started after the second MEP sends the message carrying the target MEP ID, and if the second MEP receives a specific message such as an LBR or LTR message within a specific time such as 5 seconds, the message is regarded as a response message of the first MEP. If a TLV field in the response message of the first MEP carries the MAC, the second MEP may determine, based on that the TLV field carries MAC information, that the message is a response message of the first MEP.

If the message received by the first MEP is an LBM message, the response message of the first MEP may be an LBR message. Optionally, a manner in which the LBR message carries the MEP ID and the MAC address of the first MEP may be carrying the MEP ID and the MAC address in an Optional TLV field of the LBR message, as shown by an Optional LBR TLV (MEP TLV) field and an Optional LBR TLV (MAC TLV) field in Table 3. Optionally, the MEP ID of the first MEP may not be carried. Certainly, a source MAC address (SA, Source Address) field of a header of the LBR message also carries a source MAC address, and the second MEP may also acquire the MAC address of the first MEP by directly reading the SA part of the message header. In addition, in a proprietary protocol, the MEP ID and the MAC address of the first MEP may also be carried in another field of the message. A type option in the Optional LBR TLV (MEP TLV) field in Table 3 may be selected as organization-specific organization-specific TLV, where the organization-specific TLV type correspondingly requires sequential filling in of items Type, Length, OUI, Sub-Type, and Value. For example, their specific content may be: TYPE = 31, which occupies one byte and identifies organization-specific TLV; Length = 6, which occupies two bytes and identifies a length; optionally, OUI may be OXFFFF01, which occupies three bytes and may be used to identify a manufacturing organization; Sub-Type: 1, which occupies one byte and identifies MEP TLV; and Value occupies two bytes and equals the MEP ID of the first MEP. In the Optional LBR TLV (MAC TLV) field in Table 3: TYPE = 31, which occupies one byte and identifies organization-specific TLV; Length = 10, which occupies two bytes and identifies a length; optionally, OUI may be OXFFFF01, which occupies three bytes and may be used to identify a manufacturing organization; Sub-Type: 2, which occupies one byte and identifies MAC TLV; and Value occupies 6 bytes and equals the MAC address of the first MEP. If the first MEP receives an LTM message, the response message of the first MEP may be an LTR message. Optionally, a manner in which the LTR message carries the MEP ID and the MAC address of the first MEP may be carrying the MEP ID and the MAC address in an Additional TLV field of the LTR message, as shown by an Additional LTR TLV (MEP TLV) field and an Additional LTR TLV (MAC TLV) field in Table 4. Optionally, the MEP ID of the first MEP may not be carried. Certainly, in a proprietary protocol, the MEP ID and the MAC address of the first MEP may be carried in another field of the message. A type option in the Additional LBR TLV (MEP TLV) field in Table 4 may be selected as organization-specific organization-specific TLV, where the organization-specific TLV type correspondingly requires sequential filling in of items Type, Length, OUI, Sub-Type, and Value. For example, their specific content may be: TYPE = 31, which occupies one byte and identifies organization-specific TLV; Length = 6, which occupies two bytes and identifies a length; optionally, OUI may be OXFFFF01, which occupies three bytes and may be used to identify a manufacturing organization; Sub-Type: 1, which occupies one byte and identifies MEP TLV; and Value occupies two bytes and equals the MEP ID of the first MEP. A type option in the Additional LTR TLV (MAC TLV) field in Table 4 may be selected as organization-specific organization-specific TLV, where the organization-specific TLV type correspondingly requires sequential filling in of items Type, Length, OUI, Sub-Type, and Value. For example, their specific content may be: TYPE = 31, which occupies one byte and identifies organization-specific TLV; Length = 10, which occupies two bytes and identifies a length; optionally, OUI may be OXFFFF01, which occupies three bytes and may be used to identify a manufacturing organization; Sub-Type: 2, which occupies one byte and identifies MAC TLV; and Value occupies 6 bytes and equals the MAC address of the first MEP. Optionally, An Ethernet message such as a continuity check message and a delay measurement message, after appropriate extension or adjustment, may also be used as the response message and carry the MEP ID and the MAC address of the first MEP.

Step 305: The second MEP receives the response message of the first MEP that carries the MAC address of the first MEP and acquires the MAC address of the first MEP from the message. Optionally, if the response message of the first MEP carries the MEP ID of the first MEP, the second MEP may also acquire the MEP ID of the first MEP from the message accordingly. As required, a related table entry may further be created so as to create a correspondence table entry for the received MAC address and the corresponding MEP ID. A method for acquiring the MAC address of the first MEP may be directly reading a source MAC address carried in the LBR message or LTR message; if the MAC address of the first MEP is carried in an optional field of the LBR message such as an Optional TLV field or an Additional TLV field of the LTR message, the MAC address may also be parsed and read from the TLV field; and, if in a proprietary protocol, the MAC address is placed in another field of the message, the MAC address of the first MEP may be acquired from this another field. If the MEP ID of the first MEP is carried in an optional field of the LBR message such as an Optional TLV field or an Additional TLV field of the LTR message, a method for acquiring the MEP ID of the first MEP may be parsing and acquiring the MEP ID from the TLV field; and, if in a proprietary protocol, the MEP ID is placed in another field, the MEP ID of the first MEP may be acquired from this another field. Optionally, an Ethernet message such as a continuity check message and a delay measurement message, after appropriate extension or adjustment, may also be used as the response message and carry the MEP ID and the MAC address of the first MEP; and a similar method may be used to parse and acquire the MAC address and the MEP ID of the first MEP.

The method for acquiring a MAC address of an MEP disclosed in Embodiment 3 of the present invention may not rely on enabling of a CCM continuity check function, which improves efficiency in acquiring a MAC and occupies fewer link resources. In addition, a MAC address can be acquired and used as required, which is highly flexible and solves a problem of unusable CCM DATABASE learning after aging.

### Embodiment 4

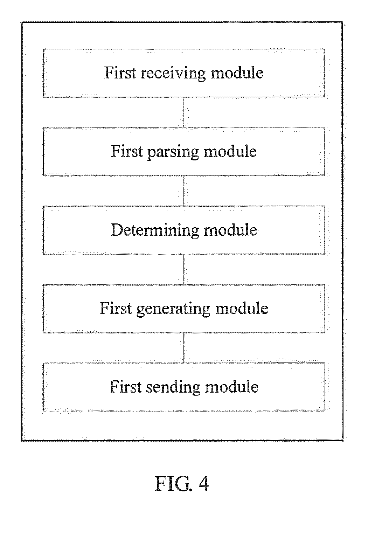

This embodiment of the present invention provides a network apparatus. The apparatus may be deployed in and applied to the Ethernet, and as shown in FIG. 4, includes:
a first receiving module, configured to receive a message; a first parsing module, configured to parse a first message received by the first receiving module and acquire, from the first message, an MD level of the first message and an MEP ID of a target MEP; a determining module, configured to determining whether the MD level of the first message acquired by the first parsing module is the same as an MD level of an MEP established on the apparatus, if the same, determine whether the MEP ID of the target MEP acquired by the first parsing module is the same as an MEP ID of the MEP established on the apparatus, and if the same, instruct a first generating module to generate a message; the first generating module, configured to generate the second message, where the second message carries a MAC address of the apparatus; and a first sending module, configured to send the message generated by the first generating module.

Optionally, the first message may be an LBM message; the second message may be an LBR message; the MEP ID of the target MEP may be carried in an optional type-length-value Optional TLV field of the LBM message; and a destination MAC address of the LBM message may be 01-80-C2-00-00-3x, where x is a maintenance domain MD level of the target MEP. Optionally, the MAC address of the apparatus may be carried only in a source MAC address field of the foregoing LBR message; or the MAC address of the apparatus may be carried in both a source MAC address field of the LBR message and an optional type-length-value Optional TLV field of the LBR message. The optional type-length-value Optional TLV field of the LBR message may also carry the MEP ID of the MEP established on the apparatus. Optionally, a manner of sending the LBR message may be sending by unicast with a source MAC address carried in the first message as a destination MAC address and may also be sending by broadcast with a destination MAC address of 01-80-C2-00-00-3x.

Optionally, the first message may be an LTM message; the second message may be an LTR message; the MEP ID of the target MEP is carried in an additional type-length-value Additional TLV field of the LTM message; and a destination MAC address of the LTM message may be 01-80-C2-00-00-3x, where x is a maintenance domain MD level of the target MEP. Optionally, the MAC address of the apparatus may be carried only in a source MAC address field of the LTR message; or the MAC address of the apparatus may be carried in both a source MAC address field of the LTR message and an additional type-length-value Additional TLV field of the LTR message. The additional type-length-value Additional TLV field of the LTR message may also carry the MEP ID of the MEP established on the apparatus. Optionally, a manner of sending the LBR message may be sending by unicast with the source MAC address carried in the first message as a destination MAC address and may also be sending by broadcast with a destination MAC address of 01-80-C2-00-00-3x. Optionally, the apparatus may further be provided, as required, with a function of parsing or analyzing another extended message.

The function of the first generating module, the function of the first parsing module and the function of the determining module are implemented in the following manner: The first generating module fills, according to an instruction, in an Optional TLV field of an LBR message or an Additional TLV field of an LTR message or a TLV field of another message with to-be-sent MAC address information of the apparatus, where optionally, the field may also be filled in with the MEP ID of the MEP established on the apparatus, and fills in other parts according to a standard message so as to form an extended LBR or LTR message carrying the to-be-sent information of the apparatus, as shown in Table 3 and Table 4, for the first sending module to send the message; the first parsing module, while reading the other message information filled in according to the standard from the extended LBM or LTM message received by the first receiving module, reads MEP ID address information carried in the Optional TLV field or the Additional TLV field and sends the information to the determining module; and the determining module determines whether the extended LBM or LTM message received by the first receiving module points to the MEP established on the apparatus, where a method for the determining is comparing an MD level carried in the message with an MD level of the first MEP, if the two are the same, comparing the MEP ID carried in the extended LBM message or LTM message with the MEP ID of the MEP established on the apparatus, and if the same, determining that the message points to itself, and informing the first generating module to generate a response message.

Optionally, as required, the apparatus may further be provided with a function of parsing or generating another extended message and can also implement the function of acquiring a MAC address of an MEP. Further, the first parsing module of the apparatus may further be provided with a function of parsing an LBR message in which an Optional TLV field carries the MEP ID and the MAC or provided with a function of parsing an LTR message in which an Additional TLV field carries the MEP ID and the MAC address; in addition, the first generating module may further be provided with a function of generating an LBM message in which an Optional TLV field carries the MEP ID or provided with a function of generating an LTM message in which an Additional TLV field carries the MEP ID. In this way, the apparatus may further have a function of the network apparatus in Embodiment 5.

The foregoing apparatus may be a switch, may be a router, may be a computer host and may also be another network/communication entity. The apparatus described in this embodiment may be used to execute the method described in Embodiment 1, Embodiment 2 or Embodiment 3.

The MEP established on the network apparatus disclosed in the embodiment of the present invention can receive and parse an LBM message or LTM message which is sent by another MEP and carries an MEP ID of the MEP and can also determine, according to MEP ID information in the message, whether the message points to the MEP, and if the message points to the MEP, generate and send an LBR message or LTR message that carries a MAC address of the MEP, so that a receiving party acquires the MAC address of the MEP, and thereby, a function of acquiring a MAC address of an MEP is implemented. The apparatus disclosed in Embodiment 4 of the present invention may not rely on enabling of a CCM continuity check function when a MAC address of an MEP is acquired, which improves efficiency in acquiring a MAC and occupies fewer link resources. In addition, a MAC address can be acquired and used as required, which is highly flexible and solves a problem of unusable CCM DATABASE learning after aging.

### Embodiment 5

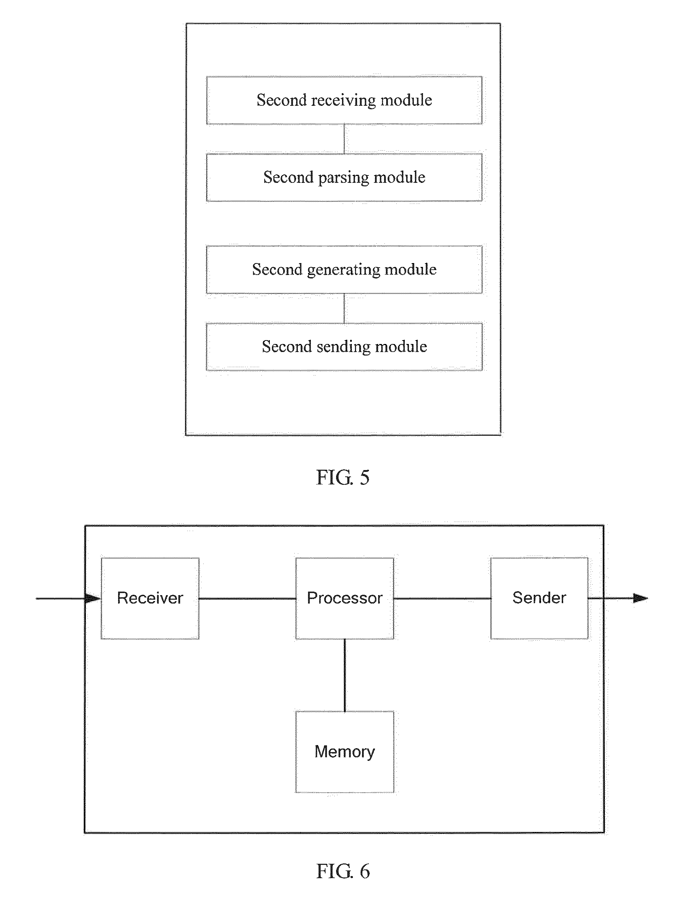

This embodiment of the present invention provides a network apparatus. As shown in FIG. 5, the apparatus may be deployed in and applied to the Ethernet, and includes:
a second generating module, configured to generate an LBM message or an LTM message, where an optional type-length-value Optional TLV field of the LBM message or an Additional TLV field of the LTM message carries an MEP, ID of a target MEP; a second sending module, configured to send the message generated by the second generating module; a second receiving module, configured to receive a message; and a second parsing module, configured to parse a loopback response LBR message received by the second receiving module, where the Optional TLV field of the message carries an MEP ID and a Media Access Control MAC address, and acquire the MEP ID and the MAC address from the Optional TLV field of the LBR message, or configured to parse an LTR message received by the second receiving module, where the Additional TLV field of the message carries an MEP ID and a Media Access Control MAC address, and acquire the MEP ID and the MAC address from the Additional TLV field of the LTR message. The function of the second generating module and the function of the second parsing module are implemented in the following manner: The second generating module fills, according to an instruction, in an Optional TLV field of a standard LBR message or an Additional TLV field of an LTR message with MEP ID information to be sent, and fills in other parts according to a standard message so as to form an extended message which carries the to-be-sent information of the apparatus, as shown in Table 1 and Table 2, for the second sending module to send the message; and the second parsing module, while reading the other message information filled in according to the standard from the extended LBM message or LTM message received by the second receiving module, reads information about the MEP ID and the MPE MAC address carried in the TLV field of the message.

The network apparatus disclosed in the embodiment of the present invention may be a switch, may be a router, may be a computer host and may also be another network/communication entity. The apparatus described in this embodiment may be used to execute the method described in Embodiment 1, Embodiment 2 or Embodiment 3.

The MEP established on the network apparatus disclosed in the embodiment of the present invention can receive and send an LBM message that carries an MEP ID of the MEP and can also receive and parse an LBR message that is sent by another MEP and carries an MEP ID and a MAC address of the MEP, thereby implementing a function of acquiring a MAC address of an MEP. The apparatus disclosed in Embodiment 5 of the present invention may not rely on enabling of a CCM continuity check function when a MAC address of an MEP is acquired, which improves efficiency in acquiring an MAC and occupies fewer link resources. In addition, a MAC address can be acquired and used as required, which solves a problem of aging of CCM DATABASE learning.

### Embodiment 6

This embodiment of the present invention further provides a communication system. The system may be used to acquire a MAC address of an MEP. The system includes at least one apparatus disclosed in Embodiment 4, and for ease of description, one such apparatus is described as a first apparatus. The system includes at least one apparatus described in Embodiment 5, and for ease of description, one such apparatus is described as a second apparatus; the first apparatus and the second apparatus are located in a same maintenance association MA; and the apparatuses interact by using messages to implement a function of acquiring a MAC address of an MEP. A specific implementation manner is: The first apparatus sends by broadcast a message that carries an MEP ID of an MEP on the second apparatus; after receiving the message, the second apparatus determines whether the MEP ID carried in the message is the same as its own MEP ID, and if the same, responds with a message carrying its own MAC address, where, optionally, the response message may further carry an MEP ID of an MEP where the first apparatus is located. After receiving the response message, the first apparatus acquires the MAC address corresponding to the MEP ID.

In the system disclosed in the embodiment of the present invention, the first apparatus and the second apparatus interact by using extended messages to implement a function of acquiring a MAC address of an MEP. The system disclosed in Embodiment 6 of the present invention may not rely on enabling of a CCM continuity check function when a MAC address of an MEP is acquired, which improves efficiency in acquiring an MAC and occupies fewer link resources. In addition, a MAC address can be acquired and used as required, which solves a problem of aging of CCM DATABASE learning.

### Embodiment 7

This embodiment of the present invention further provides a network apparatus that is applied to the Ethernet, and as shown in FIG. 6, includes a processor, a memory, a receiver and a sender, where the processor is coupled with the memory, the receiver and the sender. The network apparatus may be used to execute the method in Embodiment 1, Embodiment 2 or Embodiment 3. Specifically, the receiver is configured to receive a message from the outside of the network apparatus; the sender is configured to send, from the network apparatus according an instruction of the processor, a message to be sent; the processor is configured to process the received message, and specifically, has functions such as the functions of the first parsing module, the determining module and the first generating module in Embodiment 4 or has functions such as the functions of the second parsing module and the second generating module in Embodiment 5.

The processor may be a universal processor, for example, an integrated circuit IC, and a program executed by the processor is stored in the memory; the processor may also be a dedicated integrated circuit, for example, an ASIC (Application Specific Integrated Circuit) or FPGA (Field-Programmable gate array) or another device with a similar function.

The network apparatus disclosed in the embodiment of the present invention may not rely on enabling of a CCM continuity check function when a MAC address of an EP is acquired, which improves efficiency in acquiring an MAC and occupies fewer link resources. In addition, a MAC address can be acquired and used as required, which solves a problem of aging of CCM DATABASE learning.

Using descriptions of the foregoing embodiments, a person of ordinary skill in the art may clearly understand that the present invention may be implemented by using hardware, firmware or a combination thereof. When the present invention is implemented by using software, the foregoing functions may be stored in a computer readable medium or transmitted as one or more instructions or code in the computer readable medium. The computer readable medium includes a computer storage medium and a communication medium, where the communication medium includes any medium that facilitates transmission of a computer program from one place to another place. The storage medium may be any available medium accessible to a computer. The following provides an example but does not impose a limitation: the computer readable medium may include a RAM, a ROM, an EEPROM, a CD-ROM or other optical disc storage, a magnetic disk storage medium or another magnetic storage device, or any other medium that can carry or store expected program code in a form of an instruction or data structure and can be accessed by a computer. In addition, any connection may appropriately become a computer readable medium. For example, if the software is transmitted from a website, a server or another remote source by using a coaxial cable, an optical fiber cable, a twisted pair, a digital subscriber line (DSL) or wireless technologies such as infrared ray, radio and microwave, the coaxial cable, optical fiber cable, twisted pair, DSL or wireless technologies such as infrared ray, radio and microwave are included in fixation of a medium to which they belong. For example, a disk (Disk) and disc (disc) used by the present invention includes a compact disc CD, a laser disc, an optical disc, a digital versatile disc (DVD), a floppy disk and a Blu-ray disc, where a disk generally replicates data magnetically while a disc replicates data optically by using laser. A combination of the above should also be included in the protection scope of the computer readable medium.

In conclusion, the foregoing embodiments are merely exemplary embodiments of the technical solutions of the present invention and are not intended to limit the protection scope of the present invention. Any modification, equivalent replacement, and improvement made without departing from the spirit and principle of the present invention shall fall within the protection scope of the present invention.

## Claims

1. A method for acquiring a Media Access Control MAC address of a maintenance entity group end point MEP in Ethernet, comprising:
receiving, by a first MEP, a first message that carries an MEP identity ID of a target MEP;
determining, by the first MEP, whether a maintenance domain MD Level carried in the first message is the same as an MD Level of an MD to which the first MEP belongs;
if the same, determining whether the MEP ID of the target MEP carried in the first message is the same as an MEP ID of the first MEP itself; and
if the same, sending, by the first MEP, a second message by broadcasting or by using a source MAC address in the received first message as a destination MAC address, wherein the second message carries a MAC address of the first MEP, so that a receiving party of the second message acquires the MAC address of the first MEP.

2. The method according to claim 1, wherein:
the first message is a loopback message LBM message;
the MEP ID of the target MEP is carried in an optional type-length-value TLV field of the LBM message; and
a destination MAC address of the LBM message is 01-80-C2-00-00-3x, wherein x is the level of a maintenance domain to which the target MEP belongs.

3. The method according to claim 2, wherein:
the second message is a loopback response LBR message; and
the MAC address of the first MEP is carried in a source MAC address field of the LBR message; or the MAC address of the first MEP is carried in both a source MAC address field of the LBR message and an optional type-length-value Optional TLV field of the LBR message.

4. The method according to claim 2 or 3, wherein:
the optional type-length-value Optional TLV field of the LBR message further carries the MEP ID of the first MEP.

5. The method according to claim 1, wherein:
the first message is a link trace message LTM message;
the MEP ID of the target MEP is carried in an additional type-length-value Additional TLV field of the LTM message; and
a destination MAC address of the LTM message is 01-80-C2-00-00-3x, wherein x is the level of the maintenance domain MD to which the first MEP belongs.

6. The method according to claim 5, wherein:
the second message is a link trace response LTR message; and
the MAC address of the first MEP is carried in a source MAC address field of the LTR message; or the MAC address of the first MEP is carried in both a source MAC address field of the LTR message and an additional type-length-value Additional TLV field of the LTR message.

7. The method according to claim 6 or 5, wherein:
the Additional TLV field of the LTR message further carries the MEP ID of the first MEP.

8. A method for acquiring a Media Access Control MAC address of a maintenance entity group end point MEP in Ethernet, comprising:
sending, by broadcasting, a first message that carries an MEP identity ID of a target MEP so that the target MEP responds with a MAC address corresponding to the MEP ID, wherein the MEP ID is carried in a type-length-value TLV field of the first message; and
receiving a second message and acquiring the MAC address from a TLV field of the second message.

9. A network apparatus applied to Ethernet, wherein the apparatus comprises:
a first receiving module, configured to receive a message;
a first parsing module, configured to parse a first message received by the first receiving module and acquire, from the first message, a maintenance domain MD level of the first message and an MEP ID of a target MEP;
a determining module, configured to determine whether the MD level of the first message acquired by the first parsing module is the same as an MD level of an MEP established on the apparatus, if the same, determine whether the MEP ID of the target MEP acquired by the first parsing module is the same as an MEP ID of the MEP established on the apparatus, and if the same, instruct a first generating module to generate amessage;
the first generating module, configured to generate the second message, wherein the second message carries a Media Access Control MAC address of the apparatus; and
a first sending module, configured to send the message generated by the first generating module.

10. The network apparatus according to claim 9, wherein:
the first message is a loopback message LBM message;
the MEP ID of the target MEP is carried in an optional type-length-value Optional TLV field of the LBM message; and
a destination MAC address of the LBM message is 01-80-C2-00-00-3x, wherein x is the level of a maintenance domain MD to which the target MEP belongs.

11. The network apparatus according to claim 10, wherein:
the second message is a loopback response LBR message; and
the MAC address of the apparatus is carried in a source MAC address field of the LBR message; or the MAC address of the apparatus is carried in both a source MAC address field of the LBR message and an optional type-length-value Optional TLV field of the LBR message.

12. The network apparatus according to claim 10 or 11, wherein:
the optional type-length-value Optional TLV field of the LBR message further carries the MEP ID of the MEP established on the apparatus.

13. The network apparatus according to claim 9, wherein:
the first message is a loopback message LTM message;
the MEP ID of the destination MEP is carried in an additional type-length-value Additional TLV field of the LTM message; and
a destination MAC address of the LTM message is 01-80-C2-00-00-3x, wherein x is the level of a maintenance domain MD to which the target MEP belongs.

14. The network apparatus according to claim 13, wherein:
the second message is a loopback response LTR message;
the MAC address of the apparatus is carried in a source MAC address field of the LTR message; or the MAC address of the apparatus is carried in both a source MAC address field of the LBR message and an additional type-length-value Additional TLV field of the LTR message.

15. The network apparatus according to claim 13 or 14, wherein:
the additional type-length-value Additional TLV field of the LTR message further carries the MEP ID of the MEP established on the apparatus.

16. A network apparatus applied to the Ethernet, wherein the apparatus comprises:
a second generating module, configured to generate a message, wherein a type-length-value TLV field of the generated message carries an MEP identity ID of a target maintenance entity group end point MEP, and a destination MAC address of the message is 01-80-C2-00-00-3x, wherein x is the level of a maintenance domain MD to which the target MEP belongs;
a second sending module, configured to send the message generated by the second generating module;
a second receiving module, configured to receive a message; and
a second parsing module, configured to parse the message received by the second receiving module and acquire a MAC address corresponding to the MEP ID from a TLV field of the received message.

17. A communication system, wherein:
the system comprises at least one first network apparatus and at least one second network apparatus that are connected to each other;
the first network apparatus is any one network apparatus according to claim 9, 10, 11, 13 or 14;
the second network apparatus is the network apparatus according to claim 16; and
the first network apparatus and the second network apparatus are located in a same maintenance association MA.
